# EUROPEAN PATENT SPECIFICATION

(11) **EP 0 901 421 B1**
(45) Date of publication and mention of the grant of the patent: **12.04.2000**
(21) Application number: 97927050.1
(22) Date of filing: 27.05.1997
(51) Int. Cl.: B60J 7/16

(54) **A MOTOR VEHICLE HAVING A MANUALLY OPENABLE RIGID ROOF**
MOTORFAHRZEUG MIT RIGIDEM DACH UND MANUELLER BEDIENUNG
VEHICULE AUTOMOBILE A TOIT RIGIDE S'OUVRANT MANUELLEMENT

(30) Priority: 29.05.1996 IT TO960120 U
(43) Date of publication of application: 17.03.1999
(73) Proprietor: Fioravanti S.r.l., 10121 Torino (IT)
(72) Inventor: FIORAVANTI, Leonardo, I-10024 Moncalieri (IT)
(74) Representative: Jacobacci, Filippo
(86) International application number: EP9702729
(87) International publication number: WO9745285

(56) References cited:
- US-A- 4 950 022

## Description

The present invention concerns a motor vehicle having a manually openable rigid roof, having a front part releasably connected at its front end to the upper cross-member of the windscreen and a rear part pivoted about a horizontal transverse axis on two side pillars of the vehicle body, so that the roof can be opened by pivoting rearwardly about the said transverse axis until it rests on the boot lid.

A motor vehicle having a manually openable rigid roof of the above-mentioned type is known from US-A-4 950 022.

In the motor vehicle disclosed in said document, the hinge axis of the boot lid is spaced from the hinge axis of the rigid roof. Therefore, when the roof is in its open position, the boot lid can be opened only if the roof has been previously tilted upwardly.

In view of avoiding the above-mentioned drawback, the present invention concerns a motor vehicle having a manually openable rigid roof of the above-mentioned type which is characterised by the feature claimed in the characterising part of claim 1.

Further characteristics and advantages of the present invention will become apparent from the following description, given by way of non-limitative example, with reference to the accompanying drawings, in which:

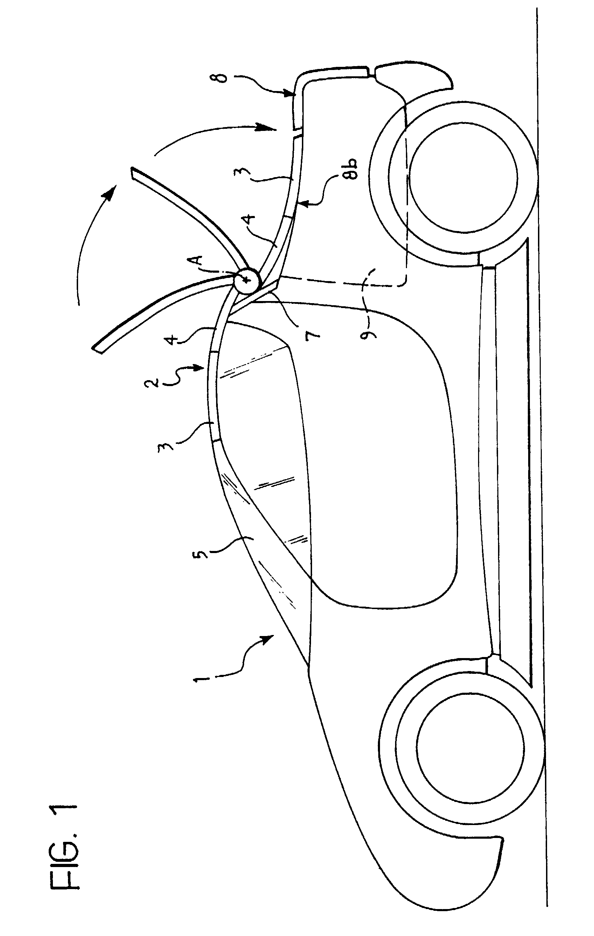

- fig.1 is a side view of a motor vehicle according to the present invention;

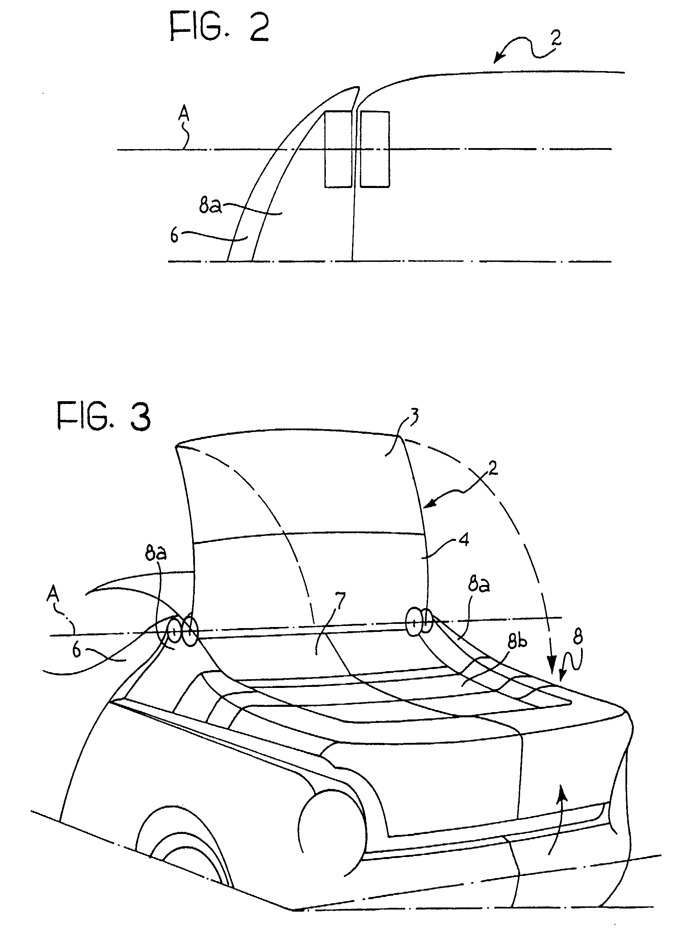

- fig.2 is a transverse section taken along one of the hinges of the roof; and
- fig.3 is a perspective view of the rear three quarters of the motor vehicle in which the roof is shown in an intermediate position.

A motor vehicle generally indicated 1 is provided with a roof 2 of curved profile, having an opaque front part 3 and a transparent rear part 4. The roof 2 is preferably moulded as a single piece from a transparent plastic material, the front part 3 being rendered opaque by painting or metal spraying.

The roof 2 is releasably connected at its front end to the upper cross-member of the windscreen 5 and is pivoted at its rear end about a horizontal transverse axis A on two pillars 6 of the vehicle body, which also function as roll-bars, as attachments for the safety belts, and containers for the side air bags.

A fixed, rearwardly-inclined, rear glass shield 7 protects the passengers from currents of air when driving with the roof in its open position.

A boot lid indicated 8 closes the top and rear of the luggage compartment 9. The boot lid 8 is pivoted on the two uprights 6 about the same pivot axis A as the roof 2 by means of two upwardly-inclined projections 8a disposed between the uprights 6 and the rear edge of the roof 2.

The boot lid 8 has a central recess 8b in its upper surface which forms a concave seat in which the convex roof 2 is housed when it has been pivoted rearwardly about the axis A to its open position. In this position, the boot lid 8 may be opened in the conventional way, carrying with it the roof fixed thereto by means which are not shown.

Therefore, in its open position the roof 2 is at the same level as the side edges of the upper part of the boot lid 8 and its transparent part 4 does not obscure visibility through the rear glass shield 7.

The fact that the roof 2, in its open position, is housed in the boot lid 8, means that it does not spoil the aesthetic appearance of the motor vehicle in this condition.

## Claims

1. A motor vehicle having a manually openable rigid roof (2), comprising a front part (3) releasably connected at its front end to the upper cross-member of the windscreen (5) and a rear part (4) pivoted about a horizontal transverse axis (A) on two side pillars (6) of the vehicle body, so that the roof (2) can be opened by pivoting rearwardly about the said transverse axis (A) until it rests on the boot lid (8), characterised in that the boot lid (8) is pivoted on the vehicle body about the same hinge axis (A) as the roof (2) by means of two upwardly-inclined front uprights (8a).

2. A motor vehicle as claimed in claim 1, characterised in that the roof (2) has a curved profile, the rear part (4) of the roof being transparent.

3. A motor vehicle as claimed in claims 1 and 2, characterised in that the boot lid (8) has an upper central concave recess (8b) for housing the roof (2) which, in its open position, is at the same level as the side edges of the upper part of the boot lid (8).

## Patentansprüche

1. Kraftfahrzeug mit einem manuell bedienbaren starren Dach (2), umfassend ein Vorderteil (3), das an seinem Frontende lösbar mit dem oberen Querträger der Windschutzscheibe (5) verbunden ist, und ein hinteres Teil (4), das an zwei seitlichen Säulen (6) der Fahrzeugkarosserie um eine horizontale Querachse (A) drehbar gelagert ist, so daß das Dach (2) mittels Rückwärtsschwenkens um die Querachse (A) geöffnet werden kann, bis es auf dem Kofferraumdeckel (8) aufliegt, dadurch gekennzeichnet, daß der Kofferraumdeckel (8) mittels zweier nach oben geneigter Frontständer (8a) um dieselbe Gelenkachse (A) wie das Dach (2) schwenkbar an der Fahrzeugkarosserie gelagert ist.

2. Kraftfahrzeug nach Anspruch 1, dadurch gekennzeichnet, daß das Dach (2) ein gebogenes Profil aufweist, wobei das hintere Teil (4) des Daches transparent ist.

3. Kraftfahrzeug nach Anspruch 1 und 2, dadurch gekennzeichnet, daß der Kofferraumdeckel (8) eine obere zentrale konkave Vertiefung (8b) zur Unterbringung des Daches (2) aufweist, welches, bei offener Stellung, auf gleicher Höhe mit den Seitenkanten des Oberteils des Kofferraumdeckels (8) liegt.

## Revendications

1. Véhicule à moteur ayant un toit rigide pouvant être ouvert manuellement (2), comportant une partie avant (3) reliée de façon libérable à son extrémité avant à l'élément transversal supérieur du pare-brise (5) et une partie arrière (4) qui pivote autour d'un axe transversal horizontal (A) sur les deux montants latéraux (6) de la carrosserie du véhicule, de telle sorte que le toit (2) peut être ouvert en pivotant vers l'arrière autour dudit axe transversal (A) jusqu'à ce qu'il repose sur le couvercle de coffre (8), caractérisé en ce que le couvercle de coffre (8) pivote sur la carrosserie de véhicule autour du même axe d'articulation (A) que le toit (2) au moyen de deux montants avant inclinés vers le haut (8a).

2. Véhicule à moteur selon la revendication 1, caractérisé en ce que le toit (2) a un profil courbe, la partie arrière (4) du toit étant transparente.

3. Véhicule à moteur selon les revendications 1 et 2, caractérisé en ce que le couvercle de coffre (8) possède un renfoncement concave central supérieur (8b) destiné à loger le toit (2) qui, dans sa position ouverte, est au même niveau que les bords latéraux de la partie supérieure du couvercle de coffre (8).
